# EUROPEAN PATENT APPLICATION

(11) **EP 2 623 307 A1**
(43) Date of publication of application: **07.08.2013**
(21) Application number: 13152387.0
(22) Date of filing: 23.01.2013
(51) Int. Cl.: B32B 1/08, B32B 5/02, B32B 27/12, B32B 27/20, B32B 27/30, B32B 27/32, F16L 11/08

(54) **Fluid transport structure with melt-processed fluoropolymer liner**

(30) Priority: 31.01.2012 US 201213362380
(71) Applicant: The Boeing Company, Chicago, IL 60606-2016 (US)
(72) Inventor: Gaw, Kevin O., Tukwila, WA Washington 98168 (US); Sanchez, Sergio H., Renton, WA Washington 98058 (US); Hainline, Robert T., Lynnwood, WA Washington 98087 (US); Clark, Laura M., Lake Stevens, WA Washington 98258 (US)
(74) Representative: McLeish, Nicholas Alistair Maxwell

(57) **Abstract**

A fluid transport structure 10, 100, such as a hose, including a liner that includes a melt-processed fluoropolymer and a reinforcing sleeve received over the liner.

## Description

### FIELD

This application relates to fluid transport structures, such as hoses, and, more particularly, to flexible, chemical-resistant and pressure-resistant fluid transport structures having a melt-processed fluoropolymer liner.

### BACKGROUND

Fluid transport structures are typically employed to move fluids, including liquids and gases, from one point to another. Therefore, fluid transport structures are important components of vehicles, including airborne vehicles, such as airplanes and helicopters, and land-based vehicles, such wheel-driven vehicles (e.g., automobiles and trucks) and track-driven vehicles (e.g., earth moving equipment).

In one common vehicle application, fluid transport structures are employed to move fuel, such as from one holding vessel to another holding vessel or from a holding vessel to an engine. Therefore, fluid transport structures should be generally chemically resistant to the fuel being transported, and should be capable of withstanding the elevated temperatures typically encountered in vehicle applications.

In another common vehicle application, fluid transport structures are employed in hydraulic systems to move hydraulic fluid. Therefore, fluid transport structures should be specifically chemically resistant to the hydraulic fluid being transported, and capable of withstanding elevated temperatures up to 275 °F. Furthermore, fluid transport structures should be capable of withstanding the cyclic high pressures exerted onto the fluid transport structures by pressurized hydraulic fluid.

Fluid transport structures designed for vehicle applications are typically formed from polytetrafluoroethylene ("PTFE") due to its inherent chemical resistance, adequate strength and flexibility. However, the working life of PTFE is limited in high-pressure hydraulic applications where temperatures and pressures widely vary across the structure.

Accordingly, those skilled in the art continue with research and development efforts in the field of fluid transport structures.

### SUMMARY

According to an aspect of the present invention there is provided" a fluid transport structure which may include a liner that includes a melt-processed fluoropolymer and, optionally, a reinforcing sleeve received over the liner.

Advantageously, the fluoropolymer is selected from the group consisting of perfluoroalkoxy polymer, polyvinylfluoride polymer, fluorinated ethylene propylene polymer, polyvinylidene fluoride polymer, polyethylenetetrafluoroethylene polymer, polyethylenechlorotrifluoroethylene polymer, tetrafluoroethylene perfluoromethylvinylether copolymer, and combinations thereof.

Advantageously, the fluoropolymer is substantially free of polytetrafluoroethylene.

Advantageously the liner is substantially free of pores. Preferably, the liner is substantially free of pores having a pore diameter less than about 200 nanometers.

Advantageously, the liner has not been sintered.

Advantageously, the liner has a wall thickness ranging from about 0.03 inches to about 0.3 inches.

Advantageously, at least one additive is incorporated into said liner. Preferably the additive comprises a conductive filler. Prefereably, the conductive filler comprises carbon.

Advantageously, the liner comprises at least a first layer and a second layer, said second layer being positioned between said first layer and said reinforcing sleeve. Preferably, the first layer comprises said fluoropolymer. Alternatively, the first layer comprises a conductive filler.

According to an aspect of the present invention there is provided, a fluid transport structure which may include a liner that includes a melt-processed fluoropolymer and a braided reinforcing sleeve positioned over the liner.

Advantageously the reinforcing sleeve comprises a braided sleeve. Preferably the reinforcing sleeve comprises a synthetic fiber. Preferably, the synthetic fiber comprises an aramid polymer.

According to an aspect of the present invention there is provided, a the disclosed fluid transport structure may include a liner that includes a melt-processed fluoropolymer and a reinforcing sleeve received over the liner, the fluid transport structure being chemically resistant to hydraulic fluid and capable of functioning at internal pressures of at least 2,500 psi, repeated high cycle fatigue loading and temperatures ranging from -65 to 275 °F.According to an aspect of the present invention there is provided, a fluid transport structure which may include a co-extruded liner that includes an inner layer and an outer layer, at least the inner layer including a melt-processed fluoropolymer, and a reinforcing sleeve received over the liner.

According to an aspect of the present invention there is provided, a method for forming a fluid transport structure. The method may include the steps of (1) providing a melt-processable fluoropolymer, (2) melt-extruding the melt-processable fluoropolymer to form the liner, and (3) positioning a reinforcing sleeve over the liner.

Advantageously, the step of controlling at least one of a heating rate and a cooling rate of said melt-processable fluoropolymer to impart said liner with a particular crystallinity.

Advantageously the melt-processable fluoropolymer is selected from the group consisting of perfluoroalkoxy polymer, polyvinylfluoride polymer, fluorinated ethylene propylene polymer, polyvinylidene fluoride polymer, polyethylenetetrafluoroethylene polymer, polyethylenechlorotrifluoroethylene polymer, tetrafluoroethylene perfluoromethylvinylether copolymer, and combinations thereof.

Advantageously, the melt-extruding step comprises co-extruding said melt-processable fluoropolymer and a second polymer to form a multi-layer structure. Preferably, the second polymer comprises fluorine and is not sintered to form a monolithic structure.

Advantageously, the positioning step comprises braiding said reinforcing sleeve over said liner.

According to an aspect of the present invention there is provided, a d method for transporting fluid. The method may include the steps of (1) providing a fluid transport structure that includes a liner comprising a melt-processed fluoropolymer and a reinforcing sleeve positioned over the liner, the liner defining an elongated bore, and (2) passing a fluid through the bore. Advantageously, the fluid is hydraulic fluid.

Other embodiments of the disclosed fluid transport structure and method will become apparent from the following detailed description, the accompanying drawings and the appended claims.

### BRIEF DESCRIPTION OF THE DRAWINGS

Fig. 1 is a side view of one embodiment of the disclosed fluid transport structure;
Fig. 2 is a front view, in section, of the fluid transport structure of Fig. 1;
Fig. 3 is a schematic view of a melt extruder forming the liner of the fluid transport structure of Fig. 2;
Fig. 4 is a front view, in section, of another embodiment of the disclosed fluid transport structure; and
Fig. 5 is flow chart depicting one aspect of the disclosed method for forming a fluid transport structure.

### DETAILED DESCRIPTION

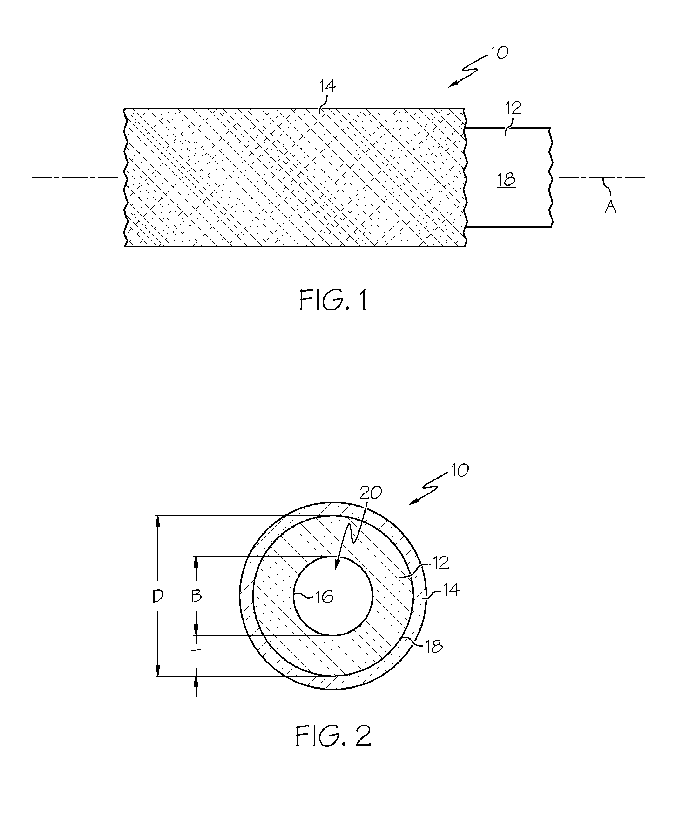

Referring to Figs. 1 and 2, a first embodiment of the disclosed fluid transport structure, generally designated 10, may include a melt-processed, fluoropolymer liner 12 and a reinforcing sleeve 14. The composition of the liner 12 and the reinforcing sleeve 14 may be dictated by the intended application of the fluid transport structure 10. Optionally, a protective cover (not shown) may be received over the reinforcing sleeve 14.

The liner 12 may be elongated along a longitudinal axis **A** (Fig. 1), and may include an inner surface 16 and an outer surface 18. The inner surface 16 of the liner 12 may define a bore 20 that extends substantially along the longitudinal axis **A** of the liner 12.

The bore 20 may have a bore diameter **B** (Fig. 2). For example, the bore diameter **B** may range from about 0.25 inches to about 3 inches. However, those skilled in the art will appreciate that bore diameters **B** less than 0.25 inches and greater than 3 inches may be used without departing from the scope of the present disclosure.

The liner 12 may have an overall diameter **D** (Fig. 2), which may be the diameter of the outer surface 18 of the liner 12. For example, the overall diameter **B** may range from about 0.5 inches to about 3 inches. However, those skilled in the art will appreciate that liners 12 having overall diameters **D** less than 0.5 inches and greater than 3 inches may be used without departing from the scope of the present disclosure.

The liner 12 may have a wall thickness **T** (Fig. 2), which may be the radial distance from the inner surface 16 to the outer surface 18 of the liner 12. For example, the wall thickness **T** may range from about 0.03 inches to about 0.3 inches, such as about 0.05 inches. However, those skilled in the art will appreciate that liners 12 having wall thicknesses **T** less than 0.03 inches and greater than 0.3 inches may be used without departing from the scope of the present disclosure.

The liner 12 may be formed from or may include one or more melt-processable fluoropolymers. As used herein, "melt-processable" refers to any polymer that, unlike polytetrafluoroethylene, melts and flows when subjected to heat and shear stress in a melt extruder.

A first example of a suitable melt-processable fluoropolymer is perfluoroalkoxy (PFA) polymer, which is available from Solvay Plastics under the trade name HYFLON. A second example of a suitable melt-processable fluoropolymer is polyvinylfluoride (PVF) polymer, which is available from Du Pont under the trade name TEDLAR. A third example of a suitable melt-processable fluoropolymers is fluorinated ethylene propylene (FEP) polymer, which is available from 3M under the trade name DYNEON. FEP polymer may be suitable for fuel applications, but may not be suitable for hydraulic fluid applications. A fourth example of a suitable melt-processable fluoropolymer is polyvinylidene fluoride (PVDF) polymer, which is available from Arkema, Inc. under the trade name KYNAR. A fifth example of a suitable melt-processable fluoropolymer is polyethylenetetrafluoroethylene (ETFE) polymer, which is available from Du Pont under the trade name TEFZEL. A sixth example of a suitable melt-processable fluoropolymer is polyethylenechlorotrifluoroethylene (ECTFE) polymer, which is available from Solvay Plastics under the trade name HALAR. A seventh example of a suitable melt-processable fluoropolymer is tetrafluoroethylene perfluoromethylvinylether copolymer (TVH), which is available from 3M under the trade name DYNEON THV. Other suitable melt-processable fluoropolymer will become apparent to those skilled in the art upon reading the present disclosure.

At this point, those skilled in the art will appreciate that the using a fluoropolymer to form the liner 12 may render the liner 12 resistant to degradation from fluids such as fuels and hydraulic fluid. Additionally, fluoropolymers are generally capable of withstanding relatively high temperatures. Therefore, the selection of fluoropolymers for the liner 12 may be dictated by, among other things, the type of fluid that will be transported by the disclosed fluid transport structure 10.

Optionally, one or more additives or fillers may be included in the liner 12. The additive or filler may be incorporated into the fluoropolymer, such as by dispersing the additive or filler in the fluoropolymer during formation of the liner 12, by coating the additive or filler onto the fluoropolymer, or by any other available technique.

In one optional expression, the liner may include a conductive filler to render the liner 12 electrically conductive. Suitable conductive fillers include, but are not limited to, carbon black, carbon fibers, carbon nanostructures (e.g., carbon nanotubes), metal powders, metal fibrils, metal wire and metal flakes. As one specific example, the liner 12 may include carbon black dispersed in a fluoropolymer in an amount (e.g., 1 to 2 percent by weight) sufficient to render the resulting liner 12 electrically conductive.

In another optional expression, the liner may include a permeation blocking material. Suitable permeation blocking materials include, but are not limited to, clays and other mineral fillers, such as mica.

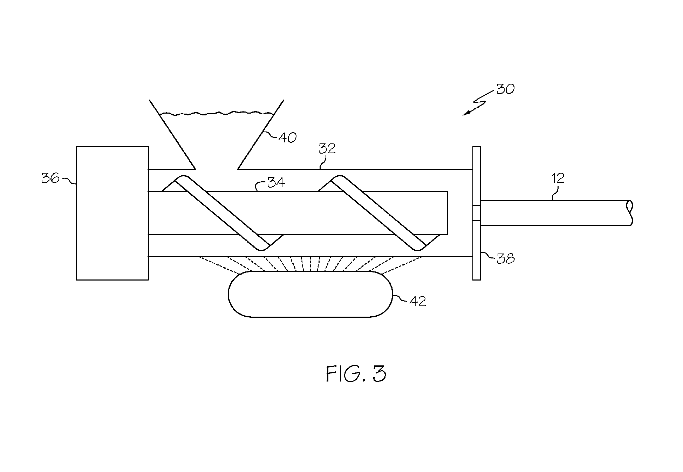

The liner 12 may be formed by a melt-extrusion process. Referring to Fig. 3, a suitable melt extruder 30 may include an elongated barrel 32, a rotating screw 34 positioned in and extending through the barrel 32, a drive assembly 36, a die 38 and a feed hopper 40. The die 38 may be selected to yield the desired size and shape of the extruded liner 12. The drive assembly 36 may be mechanically coupled to the screw 34 to rotate the screw 34 within the barrel 32, thereby applying shear to the fluoropolymer material and conveying the fluoropolymer material within the barrel 32 toward and through the die 38. One or more heaters 42 may be positioned along the barrel 32 to heat the fluoropolymer contained within the barrel 32.

Thus, the selected fluoropolymer may be loaded into the feed hopper 40. Prior to entering the barrel 32, the fluoropolymer may be in a solid state, such as powder, pellets or granules. When the fluoropolymer enters the barrel 32, heat within the barrel 32 and the shear stress applied by the rotating screw 34 may melt the fluoropolymer and may move the molten fluoropolymer toward the die 38. The fluoropolymer may exit the extruder 30 through the die 38 and then the liner 12 may be cooled at a controlled rate, thereby resulting in a liner 12 having the desired polymer crystallinity and proper liner dimensions (size and shape).

Traditionally, fluoropolymer liners are formed using a ram extrusion process in which fine, solid polymer material is compressed with a piston, heated and then sintered. When the compressed polymer is sintered to form a monolithic structure, air trapped between polymer particles cannot escape and, therefore, forms voids or pores in the resulting liner. It is believed that these pores, particularly nano/micro pores (i.e., pores having a pore diameters less than 200 nanometers), within the compressed and sintered liner may lead to undesired effects. Without being limited to any particular theory, it is believed that forming the liner 12 using a melt extrusion process in which the fluoropolymer is melt-processed by subjecting it to shear stress, as described herein, results in a liner 12 that is substantially free of pores of any dimension, and that is substantially more resistant to degradation and has improved materials properties.

The crystallinity and/or morphology of the polymer that forms the liner can be controlled by the parameters of the extrusion process and the means by which the polymer liner is cooled upon exiting the die. The control of this crystallinity and/or morphology of the extruded material may play a substantial role in the establishment of proper liner/material physical dimensional stability and the inherent materials properties (chemical resistance, modulus/strength, strain to failure, clarity, barrier properties, and the like) required for proper function in the desired application.

Referring back to Figs. 1 and 2, the reinforcing sleeve 14 may be received over the liner 12 to provide structural reinforcement. The reinforcing sleeve 14 may extend substantially entirely along the longitudinal length (axis A) of the liner 12.

The proximity of the reinforcing sleeve 14 to the liner 12 may be dictated by the intended use of the fluid transport structure 10. As one example, the reinforcing sleeve 14 may be loosely received over the liner 12 to allow some outward radial expansion of the liner 12 when the bore 20 is pressurized. As another example, the reinforcing sleeve 14 may be tightly received over the liner 12 to minimize or eliminate outward radial expansion of the liner 12 when in use. For example, in the case of a braided reinforcing sleeve 14, the tensioning of the braid may approach that of the tensile strength of the braiding material.

The liner 12 with reinforcing sleeve 14 can be attached to end fittings (metal, ceramic or plastic) to facilitate leak-proof connection to other elements of a fluid transport system.

In one construction, the reinforcing sleeve 14 may be formed as a single, monolithic body positioned over the outer surface 18 of the liner 12. The monolithic body of the reinforcing sleeve 14 may be formed separately from the liner 12 and then the liner 12 may be inserted (e.g., pressed) into the reinforcing sleeve 14. Alternatively, the monolithic body of the reinforcing sleeve 14 may be formed over the liner 12, such as by coating the reinforcing sleeve 14 onto the liner 12.

In another construction, the reinforcing sleeve 14 may be formed as a braided or woven structure positioned over the outer surface 18 of the liner 12. The braided or woven reinforcing sleeve 14 may be formed by braiding or weaving a suitable material directly onto the liner 12 or by pre-forming the reinforcing sleeve 14 and inserting the liner 12 into the pre-formed reinforcing sleeve 14. Various braiding and weaving patterns are contemplated.

The overbraiding of the liner 12 may be facilitated by the insertion of a mandrel into the bore 20 of the liner 12 to resist crush forces imposed by the tension of the winding fibers during formation of the reinforcing sleeve 14.

The reinforcing sleeve 14 may be formed from various materials, including metallic materials and non-metallic materials. Examples of suitable metallic materials for forming the reinforcing sleeve 14 include steels, such as corrosion resistant steel (e.g., stainless steel). Non-metallic materials for forming the reinforcing sleeve 14 include natural fiber-based materials and synthetic fiber-based materials. Examples of suitable synthetic fiber-based materials for forming the reinforcing sleeve 14, include nylon and aramid polymers, such as para-aramid polymers (e.g., KEVLAR brand fibers from Du Pont and TWARON brand fibers from Teijin Aramid), meta-aramid polymers (NOMEX brand fibers from Du Pont).

Accordingly, once assembled, the disclosed fluid transport structure 10 may be capable of operating at cycled temperatures and internal pressures (i.e., pressures within the bore 20), such as temperatures ranging from -65 to 275 °F and pressures greater than 2,500 psi, such as pressures ranging from 2,500 to 10,000 psi, without degrading.

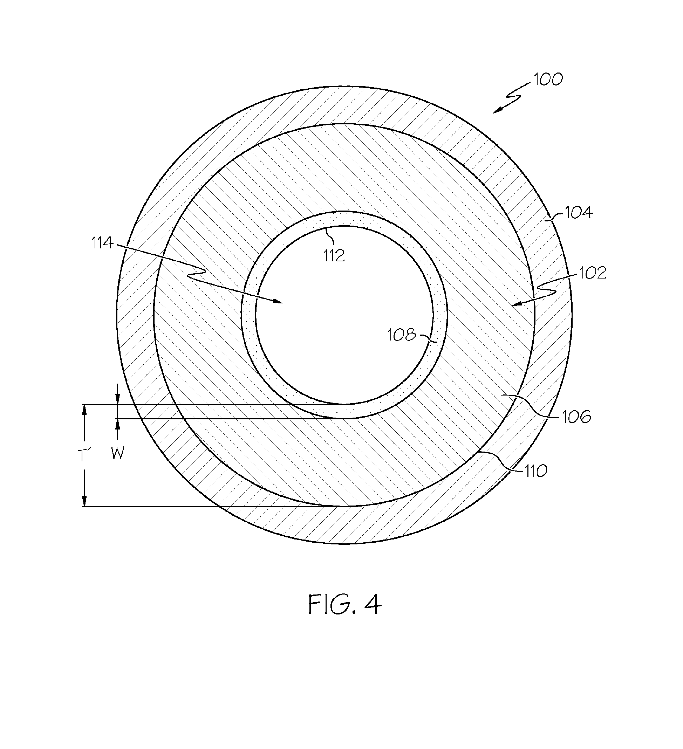

Referring to Fig. 4, a second embodiment of the disclosed fluid transport structure, generally designated 100, may include a melt-extruded liner 102 and a reinforcing sleeve 104 received over the liner 102. The liner 102 may be formed as a multi-layer structure using a melt co-extrusion process similar to the melt extrusion process discussed above.

The liner 102 may include an outer layer 106 and an inner layer 108. The outer layer 106 may define the outer surface 110 of the liner 102 and the inner layer 108 may define the inner surface 112 and the bore 114 of the liner 102. Additional layers (not shown) may be included between the outer layer 106 and the inner layer 108 without departing from the scope of the present disclosure.

The liner 102 may have a total wall thickness **T',** which may be the radial distance from the inner surface 112 to the outer surface 110 of the liner 102. The wall thickness **W** of the inner layer 108, which may be the radial distance from the inner surface 112 to the outer layer 106, may range from about 2 percent to about 100 percent of the total wall thickness **T'** of the liner 102, such as from about 10 percent to about 20 percent of the total wall thickness **T'** of the liner 102.

In one implementation of the second embodiment, both the inner layer 108 and the outer layer 106 of the liner 102 may be formed from or may include one or more melt-processable fluoropolymers. Those skilled in the art will appreciate that two different melt-processable fluoropolymers may optionally be selected for the two different layers 106, 108 of the liner 102.

In another, alternative implementation, only the inner layer 108 of the liner 102 may be formed from or may include a melt-processable fluoropolymer. The outer layer 106 (or intralayers in a multiple layer system) may be formed from various other non-fluoropolymers capable of being co-extruded/formed with the fluoropolymer forming the inner layer 108.

Surface treatment of the layers may be required for compatibilization of the layers with one another. These surface treatments can include, for example, plasma etching, corona treatment, acid digestion, solvent dissolution and the like.

Optionally, one or more additives or fillers may be included in the inner layer 108 or outer layer 106 of the liner 102. For example, as discussed above, the liner layer 108 may include a conductive filler (e.g., 1 to 2 percent by weight carbon black or similar conductive additive) to render the inner layer 108 of the liner 102 substantially more electrically conductive than the native or virgin polymer.

The multi-layer liner 102 may be formed by a melt-extrusion process, similar to the melt-extrusion process discussed above, but with the modification of being part of a co-extrusion process. Specifically, the multi-layer liner 102 may be formed by co-extruding the outer layer 106 over the inner layer 108 using a hot-melt extrusion process, thereby forming a liner 102 that is substantially free of pores.

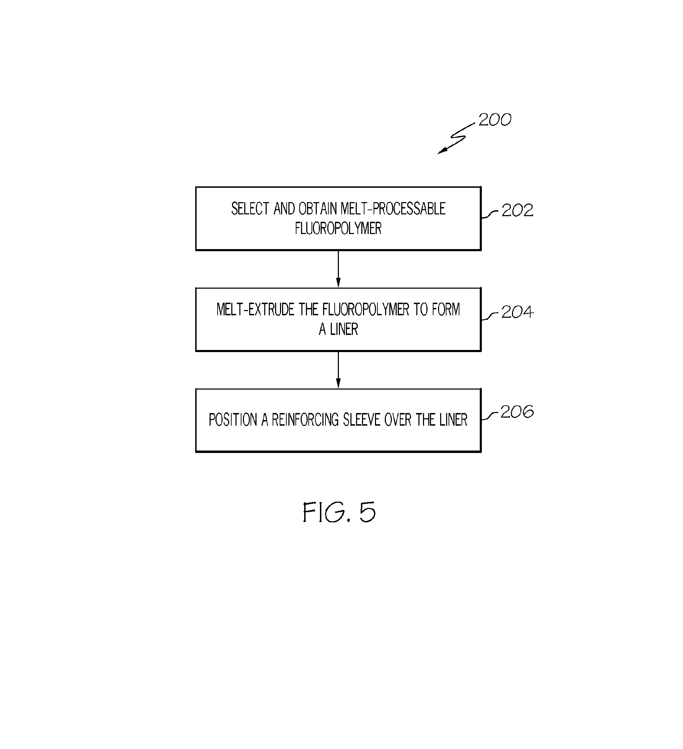

Referring to Fig. 5, disclosed is a method, generally designated 200, for forming a fluid transport structure. The method 200 may begin at block 202 with the step of selecting and obtaining a melt-processable fluoropolymer. As shown at block 204, the melt-processable fluoropolymer may be melt-extruded (or melt-co-extruded) to form a liner having the desired number of layers and the desired shape and size. Those skilled in the art will appreciate that the liner may exit the melt-extruder as a continuous, monolithic body, and may be cut to any desired length after the melt-extruding step. Then, as shown at block 206, a reinforcing sleeve may be applied over the liner and, optionally, appropriate fittings may be attached.

Accordingly, the fluid transport structures formed using the disclosed method 200 may be substantially free of pores of any dimension. As such, the disclosed fluid transport structures have advantages as compared to structures formed using a ram extrusion/sintering processes. However, the disclosed fluid transport structures may retain chemical resistance and resistance to mechanical loading or applied pressures and temperatures. These stresses could be static or dynamic forces applied by the application of fluid pressure or environment conditions.

Although various embodiments of the disclosed fluid transport structure and method have been shown and described, modifications may occur to those skilled in the art upon reading the specification. The present application includes such modifications and is limited only by the scope of the claims.

## Claims

1. A fluid transport structure 10, 100 comprising:
a liner 12, 102 comprising a melt-processed fluoropolymer; and
a reinforcing sleeve 14, 104 positioned over said liner 12, 102.

2. The fluid transport structure of Claim 1 wherein said fluoropolymer is selected from the group consisting of perfluoroalkoxy polymer, polyvinylfluoride polymer, fluorinated ethylene propylene polymer, polyvinylidene fluoride polymer, polyethylenetetrafluoroethylene polymer, polyethylenechlorotrifluoroethylene polymer, tetrafluoroethylene perfluoromethylvinylether copolymer, and combinations thereof.

3. The fluid transport structure of Claim 1 or 2 wherein said fluoropolymer is substantially free of polytetrafluoroethylene.

4. The fluid transport structure of any of Claims 1-3 wherein said liner 12, 102 is substantially free of pores.

5. The fluid transport structure of Claim 1 wherein said liner 12, 102 has a wall thickness T, T' ranging from about 0.03 inches to about 0.3 inches.

6. The fluid transport structure of Claim 1 wherein at least one additive is incorporated into said liner 12, 102.

7. The fluid transport structure of Claim 6 wherein said additive comprises a conductive filler.

8. The fluid transport structure of Claim 1 wherein said liner comprises at least a first layer 108 and a second layer 106, said second layer 106 being positioned between said first layer 108 and said reinforcing sleeve 104.

9. The fluid transport structure of Claim 8 wherein said first layer 108 comprises said fluoropolymer.

10. The fluid transport structure of Claim 8 wherein said first layer 108 comprises a conductive filler.

11. The fluid transport structure of Claim 1 wherein said reinforcing sleeve 14, 104 comprises a synthetic fiber.

12. The fluid transport structure of Claim 1 wherein said reinforcing sleeve 14, 104 comprises steel.

13. The fluid transport structure of any of Claims 1-12 capable of operating at an internal pressure of at least 2,500 psi.

14. A vehicle comprising the fluid transport structure of any of Claims 1-13.

15. A hydraulic system comprising the fluid transport structure of any of Claims 1-13.
